# EUROPÄISCHE PATENTSCHRIFT

(11) **EP 1 013 613 B1**
(45) Veröffentlichungstag und Bekanntmachung des Hinweises auf die Patenterteilung: **17.03.2004**
(21) Anmeldenummer: 99890375.1
(22) Anmeldetag: 06.12.1999
(51) Int. Cl.: C02F 3/30, C02F 3/12

(54) **Verfahren zum biologischen Reinigen phosphorhältiger Abwässer**
Process for the biological purification of waste waters containing phosphorus
Procédé de purification biologique des eaux usées contenant du phosphore

(30) Priorität: 07.12.1998 AT 204898
(43) Veröffentlichungstag der Anmeldung: 28.06.2000
(73) Patentinhaber: VTA Engineering und Umwelttechnik GmbH, 4675 Weibern (AT)
(72) Erfinder: KUBINGER, Ulrich, Ing., 4675 Weibern (AT); ORTNER, Josef W.P., Ing., 94036 Passau (DE)
(74) Vertreter: Hübscher, Gerhard, Dipl.-Ing.

(56) Entgegenhaltungen:
- EP-A- 0 522 966
- WO-A-92/04284

## Beschreibung

Die Erfindung bezieht sich auf ein Verfahren zum biologischen Reinigen phosphorhältiger Abwässer, die gegebenenfalls nach einer Denitrifikation in einem Kreislauf zunächst über eine anaerobe und anschließend eine aerobe Behandlungsstufe geführt werden, bevor die von der Phosphorbelastung bis auf einen Restgehalt gereinigten Abwässer aus dem Kreislauf ausgeschieden werden, wobei den Abwässern in der anaeroben Behandlungsstufe leicht biologisch abbaubare Kohlenstoffverbindungen, vorzugsweise kurzkettige Fettsäuren, zugemischt werden.

Um den beim chemischen Fällen des in Abwässern gelösten Phosphors zwangsläufig in großen Mengen anfallenden Fällschlamm zu vermeiden, der zusätzlich zum anfallenden Klärschlamm entsorgt werden muß, ist es bekannt (K. Mudrack, S. Kunst: Biologie der Abwasserreinigung, Fischer, Stuttgart-Jena-New York, 1994, Seiten 101 bis 106), den Phosphorgehalt von Abwässern biologisch abzubauen. Dabei macht man sich die Eigenschaft von Bakterien, die unter aeroben Bedingungen Phosphor aus den Abwässern in Form von Polyphosphaten aufnehmen, zunutze, unter anaeroben Bedingungen leicht abbaubare Kohlenstoffverbindungen in Form von Poly-β-Hydroxybuttersäure aufzunehmen und zu speichern, wobei die dazu notwendige Energie durch die Spaltung der gespeicherten Polyphosphate unter Freisetzung von Orthophosphat bereitgestellt wird. Werden diese Bakterien neuerlich aeroben Bedingungen ausgesetzt, so kann die gespeicherte Poly-β-Hydroxybuttersäure zur Vermehrung der Bakterien genutzt werden, was diesen polyphosphatspeichernden Bakterien einen Wachstumsvorteil vor anderen aeroben Bakterien gibt. Da sich zugleich eine verstärkte Phosphataufnahme einstellt, kann trotz der unter anaeroben Bedingungen durch die Freisetzung von Orthophosphat verursachten Erhöhung der Phosphorkonzentration im Abwasser ein Phosphorabbau über die dann verstärkte Polyphosphataufnahme der Bakterien im aeroben Bereich erzielt werden, wenn die zu reinigenden Abwässer in einem Kreislauf nacheinander über eine anaerobe und eine aerobe Behandlungsstufe geführt werden, bevor die bis auf einen Restgehalt an Phosphor gereinigten Abwässer aus dem Kreislauf ausgeschieden werden. Um die Rücklösung von in der aeroben Behandlungsstufe aufgenommenen Phosphaten in der aeroben Behandlungsstufe zu unterstützen, muß den Bakterien in der anaeroben Behandlungsstufe ein ausreichendes Nährstoffangebot zur Verfügung gestellt werden, das vorteilhaft aus leicht biologisch abbaubaren Kohlenstoffverbindungen, vorzugsweise kurzkettigen Fettsäuren abgedeckt wird (US 5 380 438 A, DE 39 02 626 A1, DE 39 07 734 C1, DE 39 33 326 A1). Trotz dieser Maßnahme bleibt jedoch die Phosphataufnahme in der aeroben Behandlungsstufe häufig unzureichend. Außerdem stellt sich nur eine vergleichsweise langsame Anpassung an sich ändernde Abwasserzulaufmengen ein, so daß zur Einhaltung vorgegebener Grenzwerte für den Restphosphorgehalt nachträglich eine chemische Fällung des noch im Abwasser gelösten Phosphors erforderlich wird. Zu diesem Zweck ist es bekannt (JP 09-174086 A), das Fällungsmittel in Abhängigkeit von der Phosphatkonzentration in der aeroben Behandlungsstufe und von der zulaufenden Abwassermenge der aeroben Stufe im Bereich ihres Ablaufes zuzumischen. Da sich in diesem Bereich eine bereits vergleichsweise niedrige Phosphorkonzentration ergibt, muß allerdings das Fällungsmittel in einem stöchiometrischen Überschuß dosiert werden. Wird das Fällungsmittel, beispielsweise ein Polyaluminiumchlorid, dem Abwasser zugemischt, bevor das Abwasser mit den phosphorhältigen Flocken der anaeroben Behandlungsstufe zugeführt wird (EP 0 522 966 B1), so kann zwar das Flockungsmittel günstiger dosiert werden, doch ist mit einem entsprechenden Fällschlamm zu rechnen, ohne daß die Phosphoraufnahmefähigkeit der Bakterien im Bereich der aeroben Behandlungsstufe gesteigert werden könnte.

Der Erfindung liegt somit die Aufgabe zugrunde, ein Verfahren zum biologischen Reinigen phosphorhältiger Abwässer der eingangs geschilderten Art so auszugestalten, daß die Phosphataufnahme der Bakterien in der aeroben Behandlungsstufe erheblich gesteigert werden kann, so daß eine nachgeschaltete chemische Phosphorfällung vermieden wird.

Die Erfindung löst die gestellte Aufgabe dadurch, daß die leicht biologisch abbaubaren Kohlenstoffverbindungen den Abwässern in der anaeroben Behandlungsstufe in Form eines Gemisches mit einem Primärflockungsmittel auf der Basis von Polyaluminiumhydroxidchlorid zugegeben werden.

Durch die Zufuhr eines Gemisches aus einem Primärflockungsmittel und aus leicht biologisch abbaubaren Kohlenstoffverbindungen wird in der anaeroben Behandlungsstufe nicht nur ein ausreichendes Nährstoffangebot für die aerob obligat polyphosphatspeichernden Bakterien zur Bildung der Poly-β-Hydroxybuttersäure zur Verfügung gestellt, was eine Voraussetzung für die von der Phosphatrücklösung in der anaeroben Behandlungsstufe abhängige, vermehrte Polyphosphatspeicherung in der aeroben Behandlungsstufe darstellt, sondern zugleich der Anstieg der Phosphorkonzentration im Abwasser durch eine Teilfällung in der anaeroben Behandlungsstufe verringert, ohne die Phosphataufnahmefähigkeit der Bakterien unter aeroben Bedingungen zu beeinträchtigen, weil der durch den Anteil an Kohlenstoff freigesetzte Phosphor unmittelbar in ein anorganisches Fällungsprodukt umgewandelt wird. Der Phosphorgehalt der Abwässer kann daher ohne nachträgliche chemische Phosphorfällung unter die geforderten Grenzwerte biologisch abgebaut werden.

Der Einsatz eines Primärflockungsmittels auf der Basis von Polyaluminiumhydroxidchlorid bringt eine vergleichsweise geringe Aufsalzung mit sich und begrenzt den zusätzlichen Schlammanfall im Vergleich zu einer nachträglichen Phosphorfällung erheblich.

Da sich im allgemeinen die grundsätzliche Abwasserzusammensetzung nicht entscheidend ändert, jedoch mit schwankenden Abwassermengen gerechnet werden muß, kann die Zusammensetzung des den Abwässern im Bereich der anaeroben Behandlungsstufe zuzuführenden Gemisches auf die jeweilige Abwasserzusammensetzung abgestellt werden. Wird unter diesen Voraussetzungen das in Abhängigkeit von der Abwasserzusammensetzung gewählte Gemisch aus Primärflockungsmittel und leicht biologisch abbaubaren Kohlenstoffverbindungen in einer vom Abwasserzufluß abhängigen Menge zudosiert, so kann in einfacher Weise auf sich ändernde Zuflußmengen bzw. Schmutzfracht des Abwassers reagiert werden, was sich unmittelbar in einem verbesserten zeitlichen Ansprechverhalten des biologischen Reinigungsverfahrens an die sich ändernden Zulaufbedingugnen auswirkt.

Um den polyphosphatspeichernden Bakterien in der anaeroben Behandlungsstufe leicht abbaubare Kohlenstoffverbindungen anbieten zu können, empfiehlt es sich, kurzkettige Fettsäuren für diesen Zweck einzusetzen. In diesem Zusammenhang kann das Gemisch vorteilhaft Essigsäure, Methanol und/oder Glykol als leicht biologisch abbaubare Kohlenstoffverbindungen enthalten.

Anhand der Zeichnung wird das erfindungsgemäße Verfahren näher erläutert. Es zeigen
- Fig. 1: eine Anlage zum biologischen Reinigen phosphorhältiger Abwässer nach dem erfindungsgemäßen Verfahren in einem schematischen Blockschaltbild und
- Fig. 2: den zeitlichen Verlauf der Phosphorkonzentration während der anaeroben und aeroben Abwasserbehandlung in einem schematischen Schaubild.

Das phosphorbeladene Abwasser wird nach einer üblichen Sand- und Fettabscheidung einem biologischen Behandlungsbecken 1 über einen Zulauf 2 zugeführt, das zumindest eine anaerobe Behandlungsstufe 3 und eine aerobe Behandlungsstufe 4 bildet. Die anaerobe Behandlungsstufe 3 kann dabei eine Denitrifikationsstufe umfassen oder einer Denitrifikationsstufe nachgeschaltet sein, um eine allfällige Nitratkonzentration der Abwässer abzubauen, die das Aufspalten der in den Bakterien gespeicherten Polyphosphate in der anaeroben Behandlungsstufe 3 beeinträchtigt. Den Abwässern in der anaeroben Behandlungsstufe 3 wird über eine Dosierleitung 5 ein Gemisch aus einem Primärflockungsmittel auf Basis von Polyaluminiumhydroxidchlorid und aus einer leicht biologisch abbaubaren Kohlenstoffverbindung, vorzugsweise kurzkettigen Fettsäuren, zugeführt, und zwar in einer vom Abwasserzulauf abhängigen Menge. Zu diesem Zweck ist im Zulauf 2 ein Durchflußmengengeber 6 vorgesehen, der über eine Steuereinrichtung 7 den Stelltrieb 8 einer Dosierpumpe 9 ansteuert. Da davon ausgegangen werden kann, daß sich die Abwasserzusammensetzung im Bereich einer Kläranlage nicht grundsätzlich ändert, kann der jeweilige Anteil des Primärflockungsmittels und der Kohlenstoffverbindung auf diese grundsätzliche Abwasserzusammensetzung abgestimmt werden, so daß lediglich der Abwasserzulauf hinsichtlich der Dosierung des in seiner Zusammensetzung vorgegebenen Gemisches berücksichtigt werden muß. Es ist aber auch möglich, die übliche Phosphormessung 10 in der Ablaufleitung 11 zur Steuerung der Dosierpumpe heranzuziehen, wie dies in der Zeichnung strichliert angedeutet ist.

Über die Ablaufleitung 11 fließt das Abwasser in ein Nachklärbecken 12, aus dem der sich absetzende Schlamm mittels einer Pumpe 13 wieder dem Zulauf 2 aufgegeben wird. Aufgrund der vergleichsweise großen Rücklaufmengen durchläuft das Abwasser die anaerobe Behandlungsstufe 3 und anschließend die aerobe Behandlungsstufe 4 in einem Kreislauf. Durch diese Kreislaufführung des Abwassers kann im Zusammenhang mit der Gemischzugabe der Phosphorgehalt auf einen Wert unterhalb des vorgegebenen Grenzwertes abgebaut werden, bevor es über einen Überlauf 14 des Nachklärbeckens 12 den Kreislauf verläßt. Zur Kreislaufführung des Abwassers ist es aber auch möglich, das Abwasser aus der Behandlungsstufe 4 über eine Kreislaufpumpe 15 in die Behandlungsstufe 3 zurückzupumpen. Dabei ist allerdings darauf zu achten, daß kein Sauerstoff aus der aeroben Behandlungsstufe 4 in die anaerobe Behandlungsstufe 3 verschleppt wird. Zur Vervollständigung des Verfahrensablaufes ist noch zu erwähnen, daß der Überschußschlamm über eine Abzugsleitung 16 zur Entsorgung abgeschieden wird.

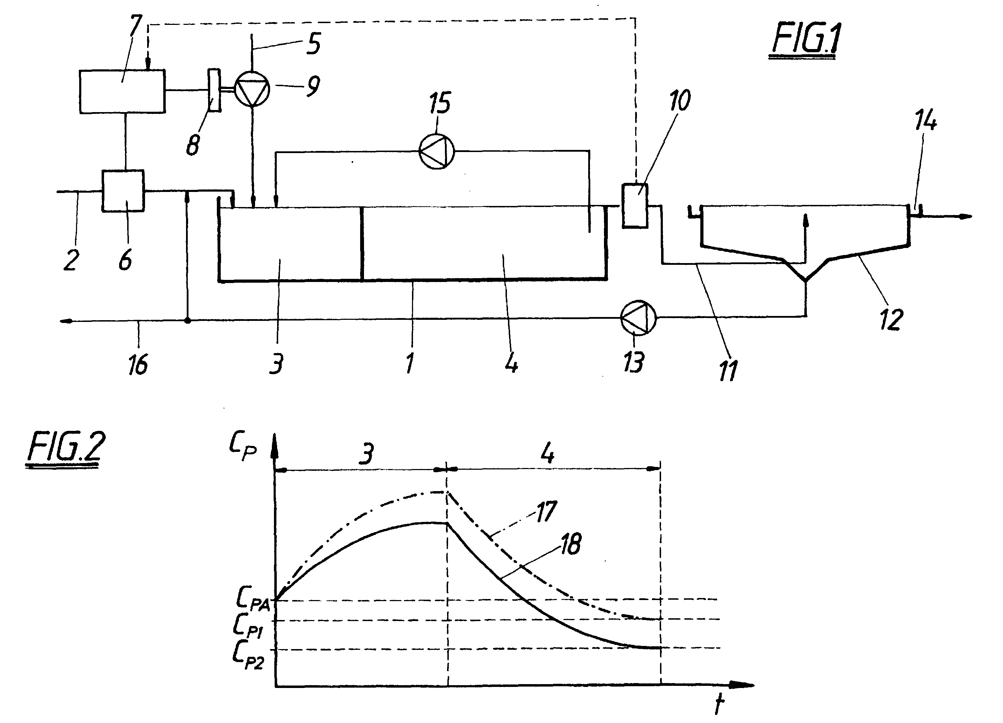

Wie der Fig. 2 entnommen werden kann, in der auf der Ordinate die Phosphorkonzentration C_{P} im Abwasser und auf der Abszisse die Behandlungszeit t in den beiden Behandlungsstufen 3 und 4 aufgetragen sind, steigt die Phosphorkonzentration in der anaeroben Behandlungsstufe 3 an, weil die Bakterien, die in der aeroben Behandlungsstufe 4 Polyphosphat gespeichert haben, das gespeicherte Polyphosphat unter Freisetzung von Orthophosphat aufspalten, um die für die Abspeicherung von Poly-β-Hydroxybuttersäure im anaeroben Bereich erforderliche Energie zur Verfügung zu haben. In der aeroben Behandlungsstufe 4, die an die anaerobe Behandlungsstufe 3 unmittelbar anschließt, wird das in der anaeroben Behandlungsstufe 3 freigesetzte Orthophosphat wieder aufgenommen, wobei eine verstärkte Phosphataufnahme beobachtet werden kann, die dazu führt, daß die Phosphatkonzentration auf einen Wert C_{P1} unterhalb der Ausgangskonzentration C_{PA} des anaeroben Bereiches abfällt, wie dies der strichpunktiert angedeutete Verlauf 17 der Phosphorkonzentration veranschaulicht. Dieser Konzentrationsverlauf wird erreicht, wenn in der anaeroben Behandlungsstufe 3 ein ausreichendes Nährstoffangebot vorhanden ist, um eine vollständige Poly-β-Hydroxybuttersäureaufnahme durch die Bakterien sicherzustellen. Die Kurve 18 zeigt den Konzentrationsverlauf der im Abwasser gelösten Phosphate, wenn zusätzlich ein Primärflockungsmittel eingesetzt wird, das in der anaeroben Behandlungsstufe 3 zu einer Phosphatfällung führt, und zwar mit der Wirkung, daß sich der Anstieg der Phosphatkonzentration verringert. Da die verstärkte Phosphataufnahmefähigkeit der Bakterien in der aeroben Behandlungsstufe 4 erhalten bleibt, kann die Phosphatkonzentration zusätzlich auf den Wert C_{P2} verringert werden. Voraussetzung für den durch die Erfindung möglichen Verlauf der Phosphatkonzentration ist, daß entsprechend den Zulaufbedingungen jeweils ausreichende Mengen an Primärflockungsmittel und an leicht biologisch abbaubaren Kohlenstoffverbindungen vorhanden sind. Dies wird durch die vom Zulauf abhängige Dosierung des Gemisches in einfacher Weise sichergestellt, wobei es nicht entscheidend ist, ob das Gemisch unmittelbar in die Behandlungsstufe 3 eingeleitet oder dieser Behandlungsstufe über das zulaufende Abwasser oder die Schlammrückführung zugefördert wird.

## Patentansprüche

1. Verfahren zum biologischen Reinigen phosphorhältiger Abwässer, die gegebenenfalls nach einer Denitrifikation in einem Kreislauf zunächst über eine anaerobe und anschließend eine aerobe Behandlungsstufe geführt werden, bevor die von der Phosphorbelastung bis auf einen Restgehalt gereinigten Abwässer aus dem Kreislauf ausgeschieden werden, wobei den Abwässern in der anaeroben Behandlungsstufe leicht biologisch abbaubare Kohlenstoffverbindungen, vorzugsweise kurzkettige Fettsäuren, zugemischt werden, **dadurch gekennzeichnet, daß** die leicht biologisch abbaubaren Kohlenstoffverbindungen den Abwässern in der anaeroben Behandlungsstufe in Form eines Gemisches mit einem Primärflockungsmittel auf der Basis von Polyaluminiumhydroxidchlorid zugegeben werden.

2. Verfahren nach Anspruch 1, **dadurch gekennzeichnet, daß** das Gemisch aus Primärflockungsmittel und aus leicht biologisch abbaubaren Kohlenstoffverbindungen den Abwässern in einer vom Abwasserzufluß abhängigen Menge zudosiert wird.

3. Verfahren nach Anspruch 1 oder 2, **dadurch gekennzeichnet, daß** den Abwässern ein Gemisch mit Essigsäure, Methanol und/oder Glykol als leicht biologisch abbaubare Kohlenstoffverbindungen zugemischt wird.

## Claims

1. A process for the biological purification of phosphorus-containing effluents which, after denitrification if required, are circulated first through an anaerobic and then an aerobic treatment stage before the effluents, which have been purified to remove the phosphorus load except for a residual content, are separated out of the circulation, there being admixed with the effluents in the anaerobic treatment stage readily degradable carbon compounds, preferably short-chain fatty acids, **characterised in that** the readily degradable carbon compounds are added to the effluents in the anaerobic stage in the form of a mixture with a polyaluminium hydroxide chloride based primary flocculant.

2. A process according to claim 1, **characterised in that** the mixture of primary flocculant and readily biologically degradable carbon compounds is metered to the effluents in a quantity dependent on the effluent inflow.

3. A process according to claim 1 or 2, **characterised in that** a mixture with acetic acid, methanol and/or glycol as readily biologically degradable carbon compounds is admixed with the effluents.

## Revendications

1. Procédé d'épuration biologique d'eaux usées contenant du phosphore, les eaux usées étant guidées en un circuit, le cas échéant après une dénitration, d'abord par un étage de traitement anaérobie et, ensuite, un étage de traitement aérobie, avant que les eaux usées, ayant été épurées de la pollution par le phosphore jusqu'à descendre à une teneur résiduelle, aient été extraites du circuit, des combinaisons carbonées, aisément décomposables biologiquement, de préférence des acides gras à chaînes courtes, étant ajoutées au mélange aux eaux usées, à l'étage de traitement anaérobie, **caractérisé en ce que** les combinaisons carbonées, aisément dégradables biologiquement, sont ajoutées aux eaux usées, dans l'étage de traitement anaérobie, sous la forme d'un mélange avec un agent floculant primaire à base de polyhydroxyde chlorure d'aluminium.

2. Procédé selon la revendication 1, **caractérisé en ce que** le mélange formé d'agent floculant primaire et de combinaisons carbonées aisément dégradables biologiquement sont ajoutés de façon dosée aux eaux usées, en une quantité dépendant de l'apport d'eaux usées.

3. Procédé selon la revendication 1 ou 2, **caractérisé en ce que** l'on ajoute en mélange aux eaux usées un mélange d'acide acétique, de méthanol et/ou de glycol, sous la forme de combinaisons carbonées aisément dégradables biologiquement.
